# EUROPEAN PATENT APPLICATION

(11) **EP 1 944 679 A2**
(43) Date of publication of application: **16.07.2008**
(21) Application number: 08000319.7
(22) Date of filing: 09.01.2008
(51) Int. Cl.: G06F 3/023

(54) **Portable information terminal capable of entering thereinto plurality of character types, record medium recording, control program, and method for character entry processing**

(30) Priority: 10.01.2007 JP 2007002534
(71) Applicant: Sharp Kabushiki Kaisha, Osaka-shi, Osaka 545-8522 (JP)
(72) Inventor: Kamiyabu, Mitsuru, Higashihiroshima-shi Hiroshima, 739-0146 (JP)
(74) Representative: Müller - Hoffmann & Partner

(57) **Abstract**

A portable information terminal (1) causes a display unit (4, 34) to display a first region that corresponds to an entry standby display in a character entry state of a first character type via a first operation key (11), and a second region that corresponds to a display for character entry in a character entry state of a second character type via a second operation key (12, 13), and accepts entry of a character in the first character type or the second character type in accordance with the first operation key or the second operation key, while maintaining the character entry state of the first character type and the character entry state of the second character type.

## Description

This nonprovisional application is based on Japanese Patent Application No. 2007-002534 filed with the Japan Patent Office on January 10, 2007, the entire contents of which are hereby incorporated by reference.

### BACKGROUND OF THE INVENTION

### Field of the Invention

The present invention relates to a portable information terminal capable of entering thereinto a plurality of character types, a record medium recording control program for character entry processing, and a method for character entry processing.

### Description of the Background Art

When characters are entered into a computer, it is necessary to use a plurality of character types such as a kana (a Japanese system of syllabic writing having characters that can be used exclusively for writing foreign words or in combination with kanji) character, a numeric character, and an alphabet. A portable information terminal such as a mobile telephone has a small number of operable keys, and hence there is adopted a method in which a plurality of characters are assigned to one key and character types are switched to thereby enter characters, or a character selected and designated with the use of a character array table is entered.

For example, Japanese Patent Laying-Open No. 2001-142612 proposes a method in which an auxiliary keyboard is used to facilitate switching of entry modes. Furthermore, Japanese Patent Laying-Open No. 2003-058305 proposes a method in which a character array table is displayed on a screen and a to-be-entered character is selected therefrom. Furthermore, Japanese Patent Laying-Open No. 2006-211294 proposes a method in which frequently-used pictorial characters and symbols are registered with an array table to enter characters and others more quickly.

However, the method of Japanese Patent Laying-Open No. 2001-142612 requires additional hardware, and hence if the method is applied to a mobile telephone and others, portability thereof is impaired.

Furthermore, in the methods of Japanese Patent Laying-Open No. 2003-058305 and Japanese Patent Laying-Open No. 2006-211294, only a limited number of characters are formed into an array table and displayed on one screen, and hence the array table is composed of a plurality of pages. Therefore, to enter a prescribed character, there is required an operation for displaying on the screen a page of the array table, where the relevant character is included, resulting in degraded usability. For example, if one wishes to enter a numeric character or an alphabet while entering kana characters, it is necessary to switch pages of the array table many times.

### SUMMARY OF THE INVENTION

The present invention has been made to solve the above-described problems. An object of the present invention is to provide a portable information terminal that enables efficient entry of a plurality of character types thereinto.

A portable information terminal according to one aspect of the present invention includes: a display unit; an operation unit; and a control unit. The operation unit has a first operation key and a second operation key for allowing a user to perform an operation for character entry. The control unit controls processing for the character entry, and includes a display control unit and an entry control unit. The display control unit causes the display unit to display a first region and a second region. The first region corresponds to an entry standby display in a character entry state of a first character type via the first operation key, and the second region corresponds to a display for character entry in a character entry state of a second character type via the second operation key. The entry control unit accepts entry of a character of the first character type or the second character type in accordance with the first operation key or the second operation key, while maintaining the character entry state of the first character type and the character entry state of the second character type.

Preferably, if a first prescribed operation is accepted when the entry standby display is being displayed on the display unit, the display control unit causes the second region to be displayed.

Preferably, the entry control unit successively accepts characters of the second character type in accordance with an operation via the second operation key, while the character entry state of the first character type and the character entry state of the second character type are being maintained.

Preferably, the portable information terminal further includes a storage unit storing at least one second character type array table for displaying in a listed manner a plurality of characters included in the second character type. The display control unit causes the second character type array table to be displayed in the second region. The entry control unit accepts, as the character entry, a character in the second character type array table, selected and designated via the second operation key.

Preferably, the storage unit further stores at least one third character type array table for displaying in a listed manner a plurality of characters included in a third character type. The operation unit further has a third operation key. In the character entry state of the first character type, if an operation via the third operation key in a first manner is accepted, the display control unit causes any of the at least one second character type array table to be displayed, and if an operation via the third operation key in a second manner is accepted, the display control unit causes any of the at least one third character type array table to be displayed.

Preferably, the first manner means that the third operation key is pressed for time less than prescribed time, and the second manner means that the third operation key is pressed for at least the prescribed time.

Preferably, in accordance with a second prescribed operation, the display control unit switches to an array table in a plurality of the second character type array tables, different from the second character type array table displayed on the display unit.

Preferably, the second character type corresponds to alphanumeric characters.

Preferably, the at least one second character type array table includes an array table of double-width alphanumeric characters and an array table of single-width alphanumeric characters, and the display control unit switches between the array table of the double-width alphanumeric characters and the array table of the single-width alphanumeric characters.

Preferably, the at least one second character type array table includes an array table of upper-case alphanumeric characters and an array table of lower-case alphanumeric characters, and the display control unit switches between the array table of the upper-case alphanumeric characters and the array table of the lower-case alphanumeric characters.

Preferably, the second character type corresponds to pictorial symbols which represent at least one of pictorial characters, symbols and emoticons.

Preferably, the display control unit switches between an array table including first pictorial symbols and an array table including second pictorial symbols.

Preferably, the portable information terminal further includes a storage unit storing at least one second character type array table for displaying in a listed manner a plurality of characters included in the second character type, and at least one third character type array table for displaying in a listed manner a plurality of characters included in a third character type. The third character type array table is used for character entry in a character entry state of the third character type via the second operation key. The display control unit causes the second character type array table or the third character type array table to be displayed in the second region. While the second character type array table is being displayed, and while the display control unit maintains a display of the second character type array table, the entry control unit successively accepts, as the character entry, characters in the second character type array table. While the third character type array table is being displayed, the entry control unit accepts, as the character entry, a character in the third character type array table, and in accordance with the fact that the entry control unit has accepted, as the character entry, the character in the third character type array table, the display control unit cancels a display of the third character type array table.

Preferably, the first operation key includes a numeric character key, an asterisk key, and a pound key.

Preferably, the second operation key is a cursor key.

Preferably, the display control unit cancels a display in the second region displayed on the display unit, in accordance with an operation via the first operation key, while the character entry state of the first character type and the character entry state of the second character type are maintained.

Preferably, the display control unit maintains a display in the second region displayed on the display unit, in accordance with an operation via the first operation key, while the character entry state of the first character type and the character entry state of the second character type are maintained.

Preferably, the second region includes a functional display for instructing the display control unit to provide a display for character entry in a character entry state of a third character type.

Preferably, the portable information terminal further includes a communication control unit for allowing the user to communicate.

A record medium according to another aspect of the present invention is a record medium recording a control program for causing a portable information terminal to execute character entry processing, the portable information terminal including an operation unit having a first operation key and a second operation key for allowing a user to perform an operation for character entry, a display unit, and a processing unit. The control program includes the steps of: the processing unit causing the display unit to display a first region corresponding to an entry standby display in a character entry state of a first character type via the first operation key, and a second region corresponding to a display for character entry in a character entry state of a second character type via the second operation key; and the processing unit accepting entry of a character of the first character type or the second character type in accordance with the first operation key or the second operation key, while maintaining the character entry state of the first character type and the character entry state of the second character type.

A method for character entry processing according to still another aspect of the present invention is a method for character entry processing, executed in a portable information terminal including an operation unit having a first operation key and a second operation key for allowing a user to perform an operation for character entry, a display unit, and a processing unit, including the steps of: the processing unit causing the display unit to display a first region corresponding to an entry standby display in a character entry state of a first character type via the first operation key, and a second region corresponding to a display for character entry in a character entry state of a second character type via the second operation key; and the processing unit accepting entry of a character of the first character type or the second character type in accordance with the first operation key or the second operation key, while maintaining the character entry state of the first character type and the character entry state of the second character type.

According to the present invention, a plurality of character types can efficiently be entered.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view that shows an example of a portable information terminal according to each embodiment of the present invention.
Fig. 2 is a drawing that shows the portable information terminal according to each embodiment of the present invention with its cabinet closed.
Fig. 3 is a functional block diagram that shows a functional configuration of the portable information terminal according to each embodiment of the present invention.
Fig. 4A is a drawing that shows an example of how a plurality of keys included in an operation unit are arranged.
Fig. 4B is a drawing that shows an example of how a character entry screen is displayed on a display portion.
Fig. 4C is a drawing that shows an example of how a pictorial symbol palette is displayed on the display portion.
Fig. 4D is a drawing that shows an example of how an alphanumeric palette is displayed on the display portion.
Fig. 5 is a drawing that shows how a character entry state according to a first embodiment of the present invention is shifted.
Fig. 6 is a drawing for describing displays on the display portion in a pictorial symbol palette entry state.
Fig. 7 is a drawing for describing displays on the display portion in an alphanumeric palette entry state.
Fig. 8 is a flowchart that shows a flow of character entry processing in the first embodiment of the present invention.
Fig. 9 is a flowchart that shows a flow of processing for determination as to pressing of a softkey A included in the operation unit.
Fig. 10 is a flowchart that shows a flow of alphanumeric palette entry processing according to the first embodiment of the present invention.
Fig. 11 is a flowchart that shows a flow of pictorial symbol palette entry processing according to each embodiment of the present invention.
Fig. 12 is a drawing that shows how a character entry state according to a second embodiment of the present invention is shifted.
Fig. 13 is a drawing that shows an example of character entry according to the second embodiment of the present invention.
Fig. 14 is a flowchart that shows a flow of alphanumeric palette entry processing according to the second embodiment of the present invention.
Fig. 15 is a drawing that shows how a character entry state according to a third embodiment of the present invention is shifted.
Fig. 16 is a drawing that shows an example of character entry according to the third embodiment of the present invention.
Fig. 17 is a flowchart that shows a flow of alphanumeric palette entry processing according to the third embodiment of the present invention.

### DESCRIPTION OF THE PREFERRED EMBODIMENTS

Embodiments of the present invention will hereinafter be described with reference to the drawings, as to the case where the embodiments are implemented in a mobile telephone. In the following description, the same parts are provided with the same reference characters, and have the same names and functions. Accordingly, the detailed description thereof will not be repeated.

Prior to the description of the portable information terminal according to the present invention, there will be provided a brief description of a typical method for Japanese entry into a mobile telephone.

A mobile telephone has a small number of operable keys, and each of the keys is assigned a plurality of characters. Therefore, a user generally switches entry modes and presses any of the keys to enter a desired character. Kana characters include hiragana (the cursive script that is one of two sets of symbols of Japanese syllabic writing) and katakana (the form of Japanese syllabic writing used especially for scientific terms, official documents, and words adopted from other languages).

For example, if a user wishes to enter a double-width or single-width numeric character or alphabet when entering a kana character, he/she initially switches from a "kana-kanji (a Japanese system of writing that utilizes characters borrowed or adopted from Chinese writing) mode" to a "double-width or single-width alphanumeric mode" and enters a numeric character or the like. Then he/she switches back to the "kana-kanji mode" to enter a kana character. However, the method of switching entry modes impairs operational efficiency when a numeric character or an alphabet is temporarily entered.

Accordingly, there is a method in which, instead of switching entry modes, one enters a phonetic script of an alphanumeric character he/she wishes to enter, in kana characters, and selects any of numeric characters and alphabets listed by a conversion engine as conversion candidates. However, the method of utilizing a function of the conversion engine depends upon functional specifications of the conversion engine, and hence such a function may not be available in some conversion engines. Furthermore, it is often the case that the conversion engine is only available in a kana-kanji mode, and thus the conversion engine cannot be activated in some entry modes.

The portable information terminal according to the present invention displays an array table that allows alphanumeric characters to be viewed in a listed manner, via a simple key operation when kana characters and kanji are entered. In other words, a character entry state via numeric keys and a character entry state via the array table can simultaneously be activated. Therefore, in an arbitrary entry mode, it becomes possible to enter alphanumeric characters in a simple manner, regardless of functional specifications of the conversion engine. Note that, in the following description, an array table for displaying characters and others in a listed manner will be referred to as a "palette".

The following description will be made taking Japanese entry as an example. The present invention can be used in the case where one is in an entry mode of a first character type (e.g. hiragana) used in a first language, and enters a second character type (which is different from the first character type, e.g. a character type such as a pictorial character) of the first language, or a third character type (e.g. an alphabet) which is a character type of a second language and different from the first character type. Here, the "character type" refers to a predetermined range of characters that are selectable through an entry operation in a certain entry mode. In other words, the first character type, the second character type, and the third character type have no exclusive relationship with one another, and may include the same characters.

The above-described second character type and third character type may be interchangeable. Alternatively, the third character type may also be a character type of the first language. Alternatively, only two character types may be provided.

In the following description, the second character type will be described as a character type that is less likely to be used successively.

### [First Embodiment]

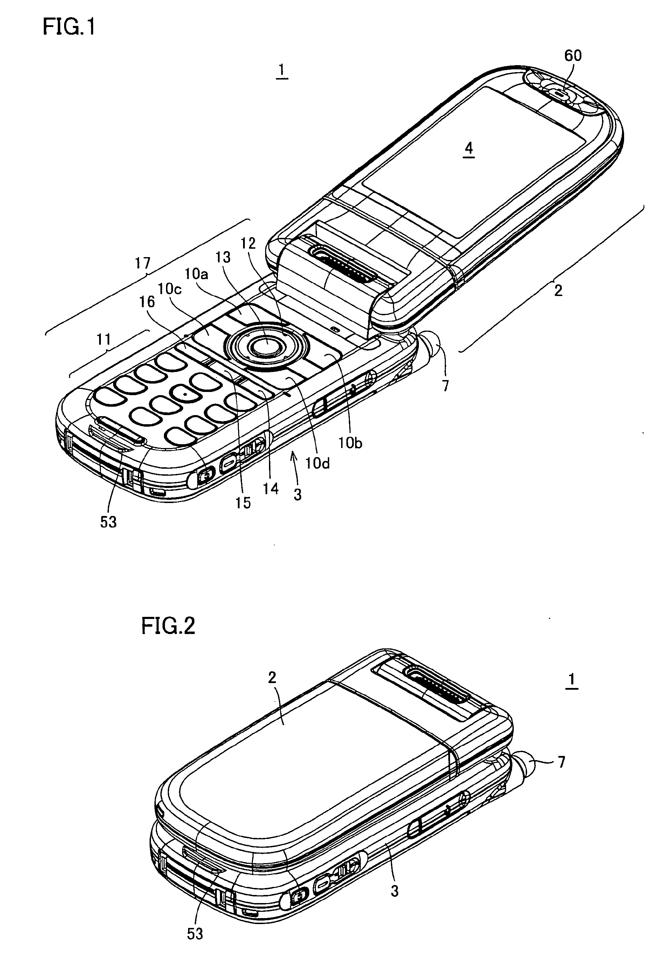

Fig. 1 is a perspective view of an example of a portable information terminal 1 according to the present embodiment, with its cabinet opened.

Fig. 2 is a drawing that shows portable information terminal 1 with its cabinet closed.

With reference to Figs. 1 and 2, portable information terminal 1 will be described. Portable information terminal 1 is a so-called folding mobile telephone. A first cabinet 2 and a second cabinet 3 are coupled via a hinge portion not shown, and portable information terminal 1 can be folded with a cabinet face of first cabinet 2 and a cabinet face of second cabinet 3 facing each other.

First cabinet 2 is provided with a display portion 4 composed of liquid crystals or the like, and a loudspeaker 60 for outputting a sound.

Second cabinet 3 is provided with an antenna 7. Furthermore, second cabinet 3 is provided with an operation unit 17 that includes various types of operation keys and operation buttons, on its inner side. Furthermore, second cabinet 3 is provided with a microphone 53 at a surface of its lower end portion on its inner side. Operation unit 17 includes softkeys 10a, 10b, 10c, and 10d, numeric keys 11, a direction key 12, a determination key 13, an on-hook key 14, a clear key 15, and an off-hook key 16.

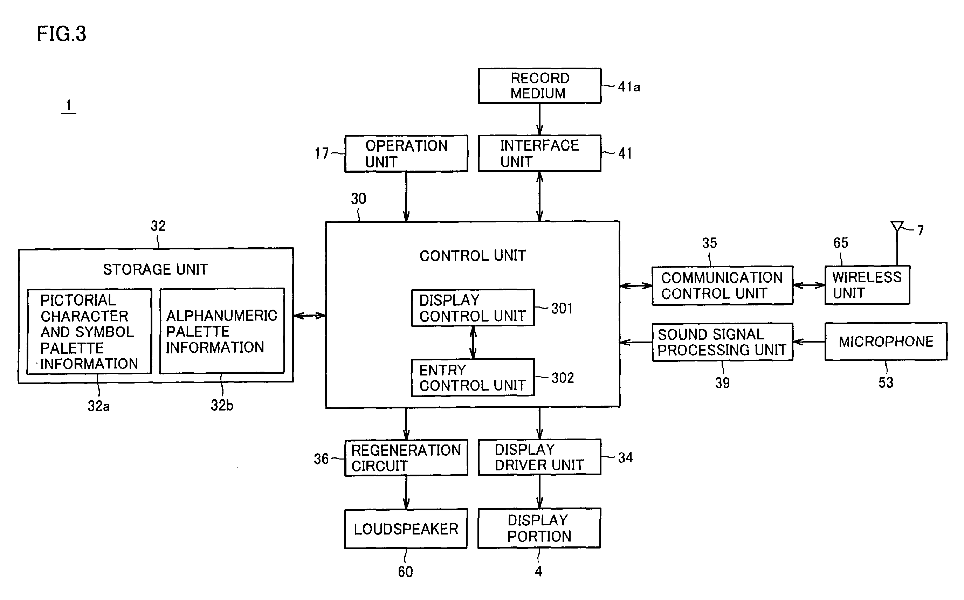

Fig. 3 is a functional block diagram that shows a functional configuration of portable information terminal 1 according to the present embodiment.

With reference to Fig. 3, a functional configuration of portable information terminal 1 will be described.

Portable information terminal 1 is provided with a storage unit 32 composed of a Read Only Memory (ROM), a Random Access Memory (RAM), and others, a control unit 30 that controls the entire portable information terminal 1, an operation unit 17 that instructs control unit 30 to provide an action through a user operation, a communication control unit 35 that controls wireless communication via a wireless unit 65 that includes antenna 7 and has a modulation/demodulation function, a sound signal processing unit 39 that executes signal processing on a sound from a microphone 53, a regeneration circuit 36 that executes signal regeneration processing for outputting a sound or the like to a loudspeaker 60, and a display driver unit 34 that provides display control to an image displayed on display portion 4.

Storage unit 32 stores in advance programs to be executed by control unit 30, and various types of data such as characters. Furthermore, storage unit 32 includes pictorial character and symbol palette information 32a and alphanumeric palette information 32b.

Pictorial character and symbol palette information 32a includes a "pictorial character palette" composed of a plurality of pieces of icon data, each of which represents an event, meaning or the like with a picture, a "symbol palette" composed of symbol data such as a punctuation mark, a comma, and a period, and an "emoticon palette" composed of data of character combinations that are made by combining characters and symbols to represent facial expressions. In the following description, the pictorial character palette, the symbol palette, and the emoticon palette are collectively referred to as a "pictorial symbol palette".

Alphanumeric palette information 32b includes a "single-width, lower-case alphanumeric character palette" composed of single-width, lower-case alphanumeric character data, a "double-width, lower-case alphanumeric character palette" composed of double-width, lower-case alphanumeric character data, a "single-width, upper-case alphanumeric character palette" composed of single-width, upper-case alphanumeric character data, and a "double-width, upper-case alphanumeric character palette" composed of double-width, upper-case alphanumeric character data. In the following description, the single-width, lower-case alphanumeric character palette, the double-width, lower-case alphanumeric character palette, the single-width, upper-case alphanumeric character palette, and the double-width, upper-case alphanumeric character palette are collectively referred to as an "alphanumeric palette". The alphanumeric palette is configured such that alphanumeric characters are displayed on one screen. Accordingly, information is not divided, and is viewed in a highly listed manner.

Control unit 30 is composed of a processor such as a Central Processing Unit (CPU), and includes a display control unit 301 and an entry control unit 302.

Display control unit 301 reads the above-described palette information from storage unit 32, and instructs display driver unit 34 to switch palette displays and others.

Entry control unit 302 accepts a character selected and designated through a key operation, as a to-be-entered character.

In accordance with the instruction from display control unit 301, display driver unit 34 causes display portion 4 to display data of the palettes stored in pictorial character and symbol palette information 32a and alphanumeric palette information 32b. Furthermore, in accordance with the instruction from entry control unit 302, display driver unit 34 causes display portion 4 to display a character selected and designated through a key operation.

Display driver unit 34 and display portion 4 may function as a display unit for displaying a character and others.

Furthermore, portable information terminal 1 may further be provided with an interface unit 41 for inserting thereinto a record medium 41a such as a memory card. Interface unit 41 reads data or a program recorded in record medium 41 a, and outputs the same to control unit 30. Control unit 30 stores the accepted data or program in, for example, a nonvolatile memory (e.g. a flash memory) not shown.

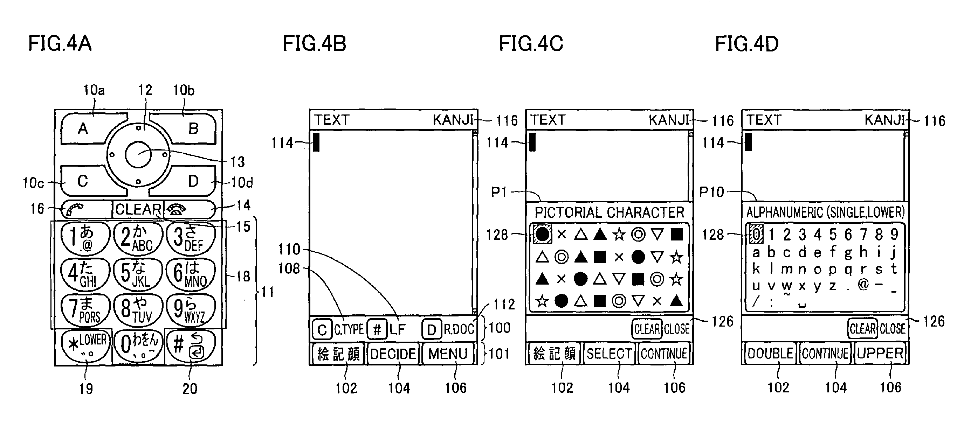

Figs. 4A-4D show examples of how the plurality of keys included in operation unit 17 are arranged, and how display portion 4 provides a display. In particular, Fig. 4A shows an example of how the plurality of keys included in operation unit 17 are arranged, Fig. 4B shows an example of how display portion 4 displays a character entry screen, Fig. 4C shows an example of how a pictorial symbol palette is displayed, and Fig. 4D shows an example of how an alphanumeric palette is displayed.

With reference to Figs. 4A-4D, there will be described displays on display portion 4, and key operations at operation unit 17.

Initially, with reference to Fig. 4A, each key in operation unit 17 will be described.

As shown in Fig. 4A, operation unit 17 includes softkeys 10a, 10b, 10c, and 10d, numeric keys 11, direction key 12, determination key 13, on-hook key 14 for accepting a call-ending action or an instruction to terminate processing, clear key 15, and off-hook key 16 for accepting an outgoing action, as keys for operating portable information terminal 1 (see Fig. 1). Direction key 12 and determination key 13 function as cursor keys. Furthermore, assume that on-hook key 14 is also assigned a function for instructing ON/OFF of a power supply.

As to each of the softkeys, at least one function assigned to each softkey is displayed on the display portion. It is therefore possible to assign different functions thereto on an application-by-application basis.

Numeric keys 11 include numeric character keys 18, an "*" key (asterisk key) 19, and a "#" key (pound key) 20.

Each of numeric character keys 18 is assigned a numeric character as well as a kana character, a symbol character, an alphabet, and others, as to-be-entered characters displayed on display portion 4. For example, a "1" key is assigned a numeric character "1", kana characters 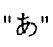 (a), 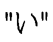 (i), 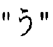 (u), 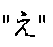 (e), 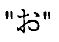 (o) (Japanese vowels), symbols ".", "@", and others. A "2" key is assigned a numeric character "2", kana characters 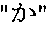 , (ka), 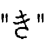 (ki), " < " (ku), 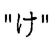 (ke), 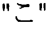 (ko) (each represents a consonant "k" + a vowel), alphabets "A", "B" and "C". Characters that can be entered by key pressing are set for each entry mode in advance. Portable information terminal 1 is designed such that to-be-entered characters are switched cyclically in accordance with the number of key pressings.

"*" key 19 is assigned "*". Furthermore, "*" key 19 is assigned a function of adding a voiced obstruent to kana characters, and switching between an upper-case character display and a lower-case character display for an alphabet being entered.

"#" key 20 is assigned "#". Furthermore, "#" key 20 is assigned a function of inserting a linefeed during character entry.

Next, with reference to Fig. 4B, there will be described a correlation between operation unit 17 and an entry screen on a character entry screen.

As to the character entry screen shown in Fig. 4B, a user presses any of the keys in operation unit 17 to thereby enter a character at a site indicated by a cursor 114.

A row 100 in display portion 4 displays functions that softkey 10c, "#" key 20, softkey 10d in operation unit 17 have on the currently-displayed screen (these functions are shown by reference characters 108, 110 and 112, respectively).

In this example, by pressing softkey 10c, the function shown by reference character 108 ("C. TYPE (CHARACTER TYPE)") is executed. In other words, entry modes are switched. Note that the current entry mode is shown in a region shown by a reference character 116. For example, in the region shown by reference character 116, a "kana-kanji mode" in which kana characters are entered is displayed as "KANJI", and a "double-width alphabet mode" in which double-width alphanumeric characters are entered is displayed as "A".

As described above, each numeric character key is assigned characters. However, types of characters that can be entered by the same numeric character key vary depending on entry modes. For example, if the "1" key is pressed in the kana-kanji mode, 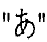 , 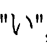 , 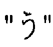 , 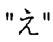 , 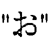 are entered in accordance with the number of pressings. Other entry modes include a double-width katakana mode, a single-width katakana mode, a double-width alphabet mode, a single-width alphabet mode, a numeric character mode, and others. In each mode, characters of a preset character type are entered through key pressing.

If "#" key 20 is pressed, the function ("LF (LINEFEED)") shown by reference character 110 is executed. In other words, a linefeed is inserted. If softkey 10d is pressed, the function ("R. DOC. (REPETITIVE DOCUMENT)") shown by reference character 112 is executed. In other words, there is displayed a repetitive document selection screen that shows commonly-used texts (repetitive documents).

A row 101 in display portion 4 provides simple descriptions of the functions that are executed through pressing of softkey 10a, determination key 13, and softkey 10b as the functions currently displayed in row 101 in display portion 4 (these functions are shown by reference characters 102, 104 and 106, respectively).

Specifically, if softkey 10a is pressed, the function 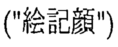 shown by reference character 102 is executed. The 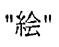 is a kanji that represents a "picture", and hence shows that it corresponds to pictorial characters. The 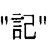 is leading one of two kanjis that represent a "symbol", and hence shows that it corresponds to symbols. The 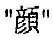 is a kanji that represents a "face", and hence shows that it corresponds to emoticons. Accordingly, if softkey 10a is pressed, any one of the pictorial symbol palettes is displayed. For example, there is shown a pictorial character palette P1 as shown in Fig. 4C.

If determination key 13 is pressed in the state shown in Fig. 4B, the function ("DECIDE") shown by reference character 104 is executed. In other words, a character displayed by cursor 114 and in an undetermined state is determined as a to-be-entered character.

If softkey 10b is pressed, the function ("MENU") shown by reference character 106 is executed. In other words, a preset "MENU" is displayed.

Next, with reference to Fig. 4C, there will be described a correlation between operation unit 17 and an entry screen on the screen where the pictorial symbol palette is displayed.

On the screen shown in Fig. 4C, there are displayed a region for an entry standby display, and a region for pictorial character palette P1.

As shown in Fig. 4C, if pictorial character palette P1 is displayed, a user can move an instruction cursor 128 within the palette by pressing direction key 12 at the upper, lower, left, and right portions thereof. Pictorial character palette P1 may be composed of a plurality of pages, or may be configured such that it can be viewed in a listed manner as in the alphanumeric palette described later. In the case where pictorial character palette P1 is composed of a plurality of pages, if instruction cursor 128 is moved beyond the page displayed on the palette, the page displayed on the palette is switched to a display on the next section (page).

As described above, each of row 100 and row 101 in display portion 4 provides simple descriptions of the functions that are executed when prescribed keys are pressed.

If softkey 10a is pressed in the state shown in Fig. 4C, the function 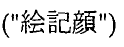 shown by reference character 102 is executed. In other words, displays of the pictorial symbol palette are switched.

If determination key 13 is pressed, the function (" SELECT") shown by reference character 104 is executed. In other words, a pictorial character selected by instruction cursor 128 is displayed at a site indicated by cursor 114. On display portion 4, the screen that displays pictorial character palette P1 is switched to the character entry screen shown in Fig. 4B.

When softkey 10b is pressed, the function ("CONTINUE") shown by reference character 106 is executed. In other words, a pictorial character selected by instruction cursor 128 is displayed at a site indicated by cursor 114. In this case, the display of pictorial character palette P1 is maintained, and thus it is possible to continuously select and designate a pictorial character in the palette and enter the same.

If clear key 15 is pressed, the function ("CLOSE") shown by reference character 126 is executed. In other words, pictorial character palette P1 is closed, and display portion 4 is switched to the character entry screen shown in Fig. 4B.

Next, with reference to Fig. 4D, there will be described a correlation between operation unit 17 and an entry screen on the screen where an alphanumeric palette is displayed.

On the screen shown in Fig. 4D, there are displayed the region for the entry standby display, and a region for a single-width, lower-case alphanumeric character palette P10.

As shown in Fig. 4D, if single-width, lower-case alphanumeric character palette P10 is displayed, a user can move instruction cursor 128 within the palette by pressing direction key 12 at the upper, lower, left, and right portions thereof, as in the case where pictorial character palette P1 is displayed. Note that the alphanumeric palette is configured such that alphanumeric characters can be viewed in a listed manner on one page. Accordingly, if instruction cursor 128 is moved beyond the page displayed on the palette, it moves around on the same page in a loop-like manner.

As described above, row 100 and row 101 in display portion 4 provides simple descriptions of functions to be executed when prescribed keys are pressed.

If softkey 10a is pressed in the state shown in Fig. 4D, the function ("DOUBLE") shown by reference character 102 is executed. Specifically, the display of single-width, lower-case alphanumeric character palette P10 shown in Fig. 4D is switched to a display of the double-width, lower-case alphanumeric character palette. In other words, a double-width display and a single-width display are switched.

If determination key 13 is pressed, the function ("CONTINUE") shown by reference character 104 is executed. In other words, an alphanumeric character selected by instruction cursor 128 is displayed at a site indicated by cursor 114. In this case, the screen where palette P10 is displayed is maintained on display portion 4, and it is possible to successively select and designate a single-width, lower-case alphanumeric character in the palette and enter the same.

If softkey 10b is pressed, the function ("UPPER") shown by reference character 106 is executed. Specifically, the display of single-width, lower-case alphanumeric character palette P10 shown in Fig. 4D is switched to a display of the single-width, upper-case alphanumeric character palette. In other words, an upper-case character display and a lower-case character display are switched.

If clear key 15 is pressed, the function ("CLOSE") shown by reference character 126 is executed. In other words, single-width, lower-case alphanumeric character palette P10 is closed, and display portion 4 is switched to the character entry screen shown in Fig. 4B.

Note that such switching of displays can be designed to be performed in the above-described pictorial symbol palette, as well as in the alphanumeric palette. For example, pictorial symbols (they include at least one of pictorial characters, symbols, and emoticons) are divided in advance such that they can be displayed in a listed manner on some palettes, as in the above-described alphanumeric palette. By configuring the pictorial symbol palette as such, displays can be switched as in the alphanumeric palette.

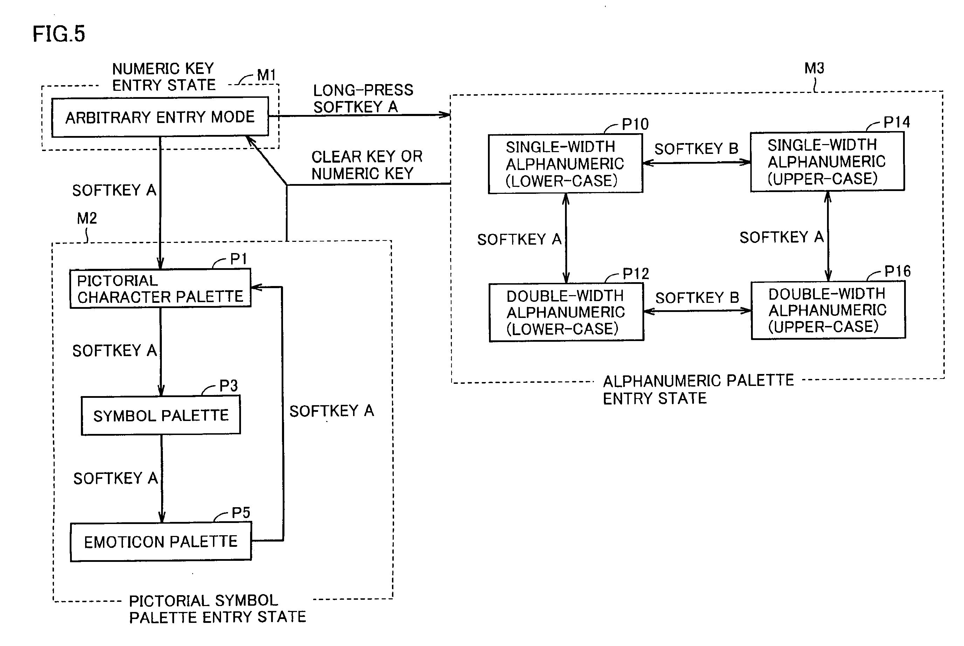

Fig. 5 is a drawing that shows how the character entry state according to the present embodiment is shifted.

With reference to Fig. 5, a shift of an entry state will be described. In the following description, softkey 10a is referred to as softkey A, softkey 10b as softkey B, clear key 15 as a clear key, numeric keys 11 as numeric keys, determination key 13 as a determination key, and display portion 4 as a display portion, unless otherwise particularly specified.

In portable information terminal 1 according to the present embodiment, character entry states include a "numeric key entry state M1" in which any of numeric keys 11 is pressed to thereby enter a character (kana, kanji), a "pictorial symbol palette entry state M2" in which a character (pictorial character, symbol, emoticon) is entered from any of the pictorial symbol palettes, and an "alphanumeric palette entry state M3" in which a character (alphanumeric character) is entered from any of the alphanumeric palettes.

In numeric key entry state M1, it is possible to enter a character in an arbitrary entry mode. Here, when softkey A is pressed, the state is shifted to pictorial symbol palette entry state M2. When softkey A is pressed for at least prescribed time (which is hereinafter referred to as "long-pressing"), the state is shifted to alphanumeric palette entry state M3. In the following description and the drawings, a state where softkey A is pressed for a short period of time is simply referred to as "pressing of softkey A". An operation of softkey A in shifting to another entry state is not limited to pressing or long-pressing. Instead of long-pressing of softkey A, softkey A may successively be pressed. Alternatively, softkey A may be implemented as a touch panel or the like, and a portion corresponding to softkey A may be touched to thereby shift to another entry state.

In Fig. 5, a palette displayed when the state is shifted from numeric key entry state M1 to pictorial symbol palette entry state M2 is set to be pictorial character palette P1. However, the palette may be the one opened at the last in pictorial symbol palette entry state M2 in the preceding shift. Alternatively, the palette may be another pictorial symbol palette set in advance.

If softkey A is pressed in pictorial symbol palette entry state M2, then pictorial character palette P1, symbol palette P3, and emoticon palette P5 are cyclically switched in accordance with the number of key pressings. The switching order is not limited to the one shown in Fig. 5.

If the clear key or the numeric key is pressed in pictorial symbol palette entry state M2, the state is shifted to numeric key entry state M1. Note that in numeric key entry state M1, there is maintained an entry mode adopted before the state was shifted to pictorial symbol palette entry state M2.

A palette displayed when the state is shifted from numeric key entry state M1 to alphanumeric palette entry state M3 is initially set to be single-width, lower-case alphanumeric character palette P10. A palette displayed subsequently is set to be a palette that was opened at the last in alphanumeric palette entry state M3 in the preceding shift. However, the palette displayed in each stage may be the one set in advance.

If softkey A is pressed in alphanumeric palette entry state M3, a double-width display and a single-width display are switched. For example, if single-width, lower-case alphanumeric character palette P10 is displayed on the display portion, and softkey A is pressed, the display is thereby switched to double-width, lower-case alphanumeric character palette P12.

If softkey B is pressed, a lower-case character display and an upper-case character display are switched. For example, if single-width, lower-case alphanumeric character palette P10 is displayed on the display portion, and softkey B is pressed, the display is thereby switched to single-width, upper-case alphanumeric character palette P14.

If the clear key or the numeric key is pressed in alphanumeric palette entry state M3, the state is shifted to numeric key entry state M1. Note that in numeric key entry state M1, there is maintained an entry mode adopted before the state was shifted to alphanumeric palette entry state M3.

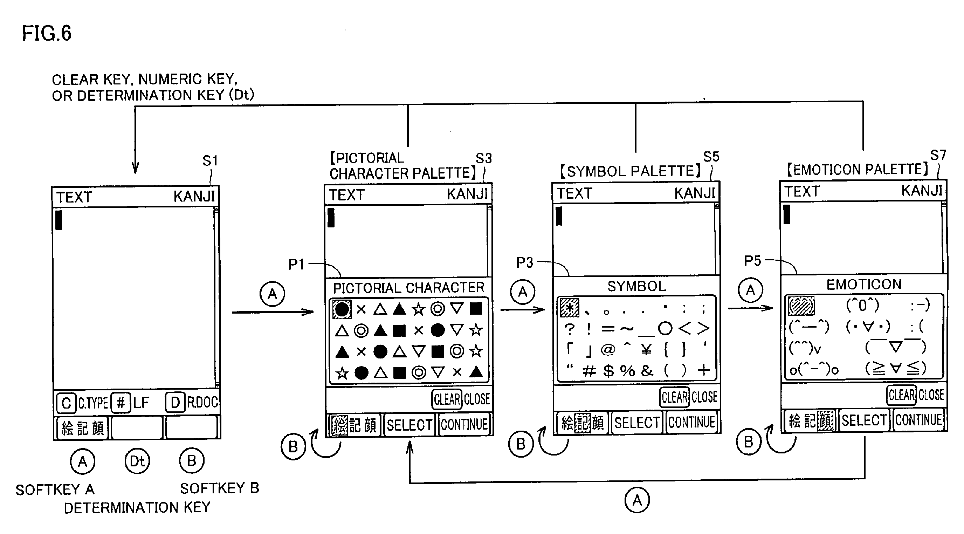

Fig. 6 is a drawing for describing displays on the display portion in pictorial symbol palette entry state M2.

With reference to Fig. 6, there will be described a display on the display portion in pictorial symbol palette entry state M2.

A screen S1 shows a screen on the display portion in numeric key entry state M1. Here, if softkey A is pressed, the state is shifted to pictorial symbol palette entry state M2, and the display portion provides a display such as a screen S3.

Screen S3 shows a screen where pictorial character palette P1 is displayed. Here, if softkey A is pressed, the display portion is switched to a screen S5.

Screen S5 shows a screen where symbol palette P3 is displayed. Here, if softkey A is pressed, the display portion is switched to a screen S7.

Screen S7 shows a screen where emoticon palette P5 is displayed. Here, if softkey A is pressed, the display portion is switched to screen S3.

As such, in pictorial symbol palette entry state M2, the displays of the palette are cyclically switched in accordance with the number of key pressings.

Note that if any of the palettes is displayed on the display portion, and softkey B is pressed, a character selected by the instruction cursor is entered, and the screen where the relevant palette is displayed appears again. Alternatively, if any of the clear key, the numeric key, and the determination key is pressed, the palette is closed, and the screen being displayed is switched to screen S1. In other words, the screen is shifted from pictorial symbol palette entry state M2 to numeric key entry state M1.

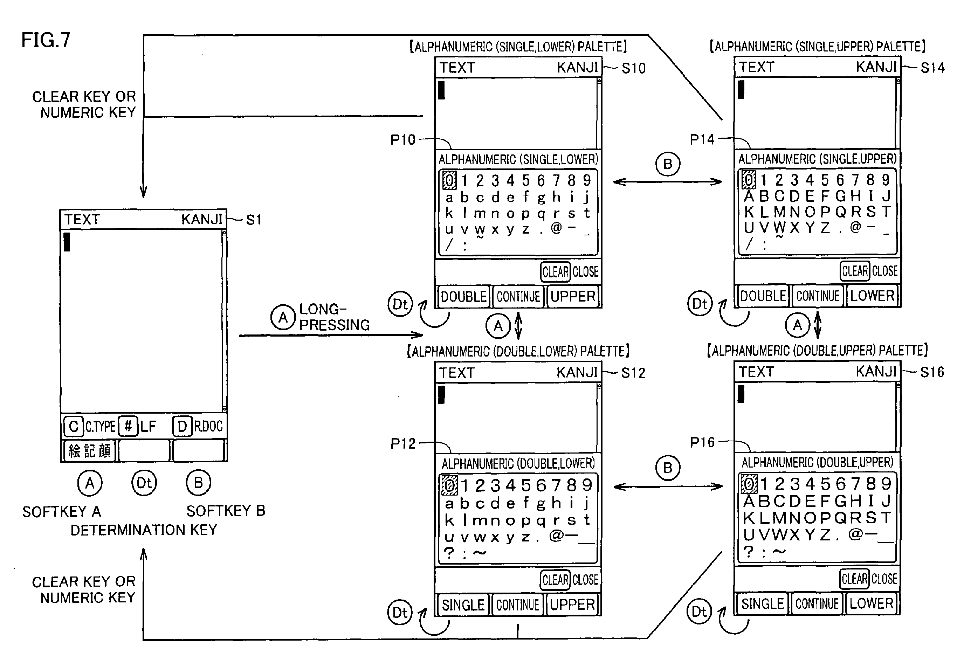

Fig. 7 is a drawing for describing a display on the display portion in alphanumeric palette entry state M3.

With reference to Fig. 7, there will be described displays on the display portion in alphanumeric palette entry state M3.

Screen S 1 shows a screen on the display portion in numeric key entry state M1. Here, if softkey A is long-pressed, the state is shifted to alphanumeric palette entry state M3. As a result, the display portion provides a display of the palette that was opened at the last when alphanumeric palette entry state M3 was adopted last (any of screens S10, S12, S14, and S16).

Screen S10 shows a screen where single-width, lower-case alphanumeric palette P10 is displayed. Here, if softkey A is pressed, a double-width display and a single-width display of the palette are switched. As a result, the display portion provides a display such as screen S12. If softkey B is pressed, an upper-case character display and a lower-case character display of the palette are switched. As a result, the display portion provides a display such as screen S 14.

Screen S12 shows a screen where double-width, lower-case alphanumeric palette P12 is displayed. Here, if softkey A is pressed, a double-width display and a single-width display of the palette are switched. As a result, the display portion provides a display such as screen S10. If softkey B is pressed, an upper-case character display and a lower-case character display of the palette are switched. As a result, the display portion provides a display such as screen S16.

Screen S 14 shows a screen where single-width, upper-case alphanumeric palette P 14 is displayed. Here, if softkey A is pressed, a double-width display and a single-width display of the palette are switched. As a result, the display portion provides a display such as screen S16. If softkey B is pressed, an upper-case character display and a lower-case character display of the palette are switched. As a result, the display portion provides a display such as screen S10.

Screen S16 shows a screen where double-width, upper-case alphanumeric palette P16 is displayed. Here, if softkey A is pressed, a double-width display and a single-width display of the palette are switched. As a result, the display portion provides a display such as screen S 14. If softkey B is pressed, an upper-case character display and a lower-case character display of the palette are switched. As a result, the display portion provides a display such as screen S12.

As such, in alphanumeric palette entry state M3, by operating softkey A and (/or) softkey B at most twice, a palette desired by a user can be displayed from a certain palette.

Note that, if any palette is displayed on the display portion, and the determination key is pressed, a character being selected by the instruction cursor is thereby entered, and the screen where the relevant palette is displayed appears again. If the clear key or the numeric key is pressed, the palette is closed and switched to screen S 1. In other words, the state is shifted from alphanumeric palette entry state M3 to numeric key entry state M1.

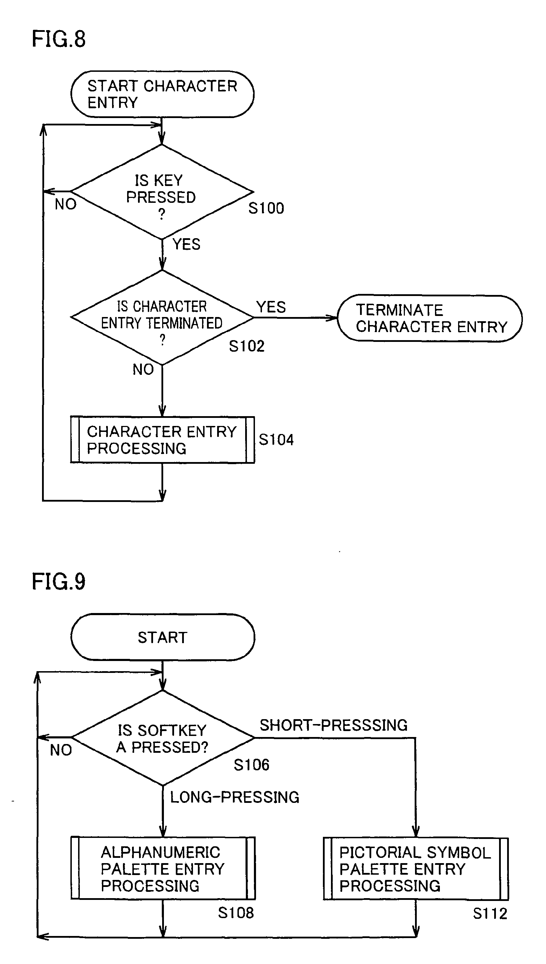

Fig. 8 is a flowchart that shows a flow of character entry processing.

With reference to Fig. 8, there will be described a flow of character entry performed in portable information terminal 1. The character entry processing is executed when, for example, e-mail software in portable information terminal 1 is activated, and an e-mail text creation screen as shown in Fig. 4B is displayed on the display portion. In this case, control unit 30 is in a standby state where it waits for character entry via the numeric keys included in operation unit 17. Here, in the character entry processing, the numeric key entry state is set to be an initial character entry state. However, the pictorial symbol palette entry state or the alphanumeric palette entry state may be set as an initial state.

The processing shown in the flowchart in Fig. 8 is implemented by a processor, which serves as control unit 30, reading a program stored in storage unit 32 and executing the same, and controlling each of the units shown in Fig. 3. The processing shown in the flowchart in Fig. 8 is merely a practical example of the character entry processing, and may be executed by interchanging the steps in their order.

In step S100, control unit 30 determines whether a key included in operation unit 17 is pressed or not. If no key is pressed (NO in step S100), control unit 30 returns to step S100.

In contrast, if control unit 30 determines that a key is pressed (YES in step S100), it determines in step S102 whether or not the pressed key indicates termination of character entry. If control unit 30 determines that character entry is terminated (YES in step S102), it terminates character entry processing. For example, if on-hook key 14 is pressed, control unit 30 terminates character entry processing.

In contrast, if control unit 30 determines that character entry is not terminated (NO in step S102), entry control unit 302 of control unit 30 executes character entry processing in step S 104 in accordance with the pressed numeric key. For example, if a numeric key is pressed in the e-mail text creation screen as shown in Fig. 4B, a character assigned to the numeric key is displayed at a site indicated by cursor 114.

Control unit 30 then returns to step S100, and is brought into the standby state again where it waits for an operation via operation unit 17.

As described above, control unit 30 executes character entry processing via the numeric keys. Furthermore, control unit 30 concurrently executes the following processing for determination as to pressing of softkey A, along with the above-described processing.

Fig. 9 is a flowchart that shows a flow of processing for determination as to pressing of softkey A.

With reference to Fig. 9, there will be described the processing for determination as to pressing of softkey A.

In step S106, control unit 30 determines whether softkey A is pressed or not.

If control unit 30 determines that softkey A is not pressed (NO in step S106), it returns to the processing in step S 106, and determines again whether softkey A is pressed or not.

If control unit 30 determines that softkey A is long-pressed (LONG-PRESSING in step S106), display control unit 301 of control unit 30 displays an alphanumeric palette in a prescribed region on the display portion. Next, control unit 30 executes in step S108 alphanumeric palette entry processing, which will be described later, and returns to the processing in step S106.

If control unit 30 determines that softkey A is short-pressed (SHORT-PRESSING in step S106), display control unit 301 of control unit 30 displays a pictorial symbol palette in a prescribed region on the display portion. Next, control unit 30 executes in step S 112 pictorial symbol palette entry processing, which will be described later, and returns to the processing in step S106.

As described above, control unit 30 executes the processing for determination as to pressing of softkey A.

As described above, control unit 30 concurrently executes the processing shown in Fig. 8 and the processing shown in Fig. 9. In other words, the standby state that accepts character entry via the numeric keys (the processing shown in Fig. 8) and the standby state that accepts character entry via the palette (the processing shown in Fig. 9) are concurrently activated.

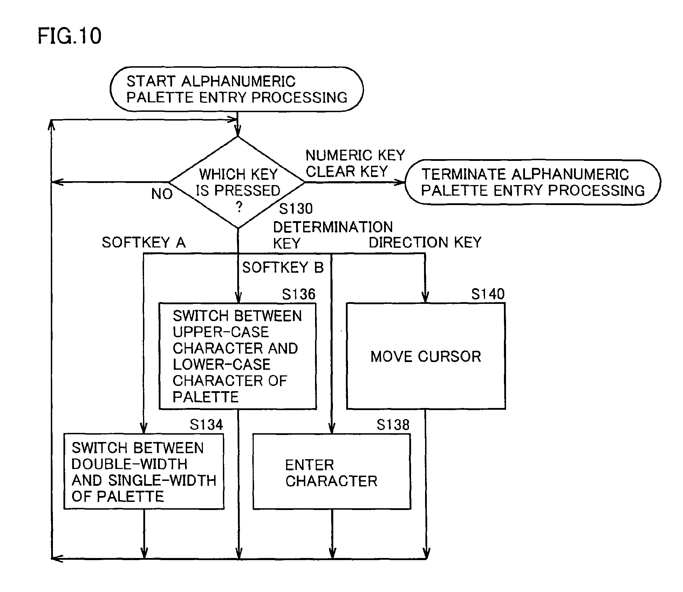

Fig. 10 is a flowchart that shows a flow of the alphanumeric palette entry processing according to the present embodiment.

With reference to Fig. 10, there will be described the alphanumeric palette entry processing in step S108 in Fig. 9.

In step S130, control unit 30 checks which key is pressed.

If control unit 30 determines that no key is pressed (NO in step S130), it returns to the processing in step S 130.

If control unit 30 determines that the pressed key is softkey A (SOFTKEY A in step S130), it instructs display driver unit 34 to switch between a double-width display and a single-width display of the palette in step S 134, and returns to the processing in step S 130.

If control unit 30 determines that the pressed key is softkey B (SOFTKEY B in step S130), it instructs display driver unit 34 to switch between an upper-case character display and a lower-case character display of the palette in step S 13 6, and returns to the processing in step S 130.

If control unit 30 determines that the pressed key is the determination key (DETERMINATION KEY in step S 130), it enters a character selected by the instruction cursor in step S 13 8, and returns to the processing in step S130.

If control unit 30 determines that the pressed key is the direction key (DIRECTION KEY in step S 130), it instructs display driver unit 34 to move the instruction cursor to a direction indicated by the direction key being pressed, and display the same in step S 140, and returns to the processing in step S130.

If control unit 30 determines that the pressed key is the numeric key or the clear key (NUMERIC KEY, CLEAR KEY in step S 130), it instructs display driver unit 34 to close the alphanumeric palette displayed on the display portion, and terminates the alphanumeric palette entry processing. Note that if the numeric key is pressed, character entry is performed through the processing shown in Fig. 8 (step S104).

As such, the alphanumeric palette entry processing (step S 108 in Fig. 9) is terminated.

Note that steps S134 and S136 in Fig. 10 are executed by display control unit 301, and steps S138 and S140 are executed by entry control unit 302.

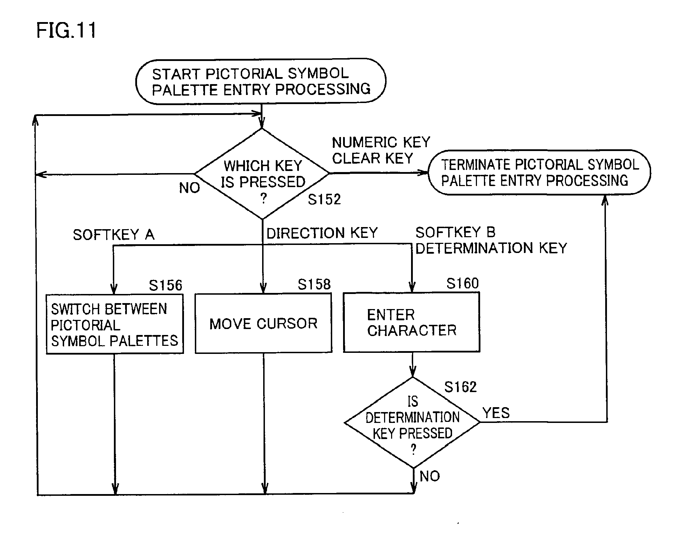

Fig. 11 is a flowchart that shows a flow of pictorial symbol palette entry processing.

With reference to Fig. 11, there will be described the pictorial symbol palette entry processing in step S 112 in Fig. 9.

In step S 152, control unit 30 checks which key is pressed.

If control unit 30 determines that no key is pressed (NO in step S 152), it returns to the processing in step S 152.

If control unit 30 determines that the pressed key is softkey A (SOFTKEY A in step S 152), it instructs display driver unit 34 to switch displays of the pictorial symbol palette in step S 156, and returns to the processing in step S 152.

If control unit 30 determines that the pressed key is the direction key (DIRECTION KEY in step S152), it instructs display driver unit 34 to move the instruction cursor to the direction indicated by the direction key being pressed, and display the same in step S158, and returns to processing in step S152.

If control unit 30 determines that the pressed key is a determination key or softkey B (SOFTKEY B, DETERMINATION KEY in step S 152), it enters a character selected by the instruction cursor in step S160.

Next, in step S162, control unit 30 determines whether the pressed key is the determination key or not. If control unit 30 determines that the pressed key is the determination key (YES in step S162), it terminates the pictorial symbol palette entry processing.

In contrast, if control unit 30 determines that the pressed key is softkey B (NO in step S162), it maintains the display of the palette, and returns to the processing in step S152.

If control unit 30 determines that the pressed key is the numeric key or the clear key (NUMERIC KEY, CLEAR KEY in step S 152), it instructs display driver unit 34 to close the pictorial symbol palette displayed on the display portion, and terminates the pictorial symbol palette entry processing. Note that if the numeric key is pressed, character entry is performed through the processing shown in Fig. 8 (step S104).

As such, the pictorial symbol palette entry processing (step S 112 in Fig. 9) is terminated. Note that pictorial characters and others included in the pictorial symbol palette are less likely to be entered successively. Therefore, in the pictorial symbol palette entry processing according to the present embodiment, the pictorial symbol palette entry processing is terminated when one character is entered from the palette. However, the entry processing may be terminated when a prescribed number of characters are entered.

Note that step S156 in Fig. 11 is executed by display control unit 301, and steps S158 and S160 are executed by entry control unit 302.

As described above, portable information terminal 1 according to the present embodiment displays a palette that enables alphanumeric characters to be viewed in a listed manner through a simple key operation during character entry. In other words, the character entry state via the numeric keys and the character entry state via the array table can simultaneously be activated. This enables a user to enter an alphanumeric character easily, and can save the user's time and effort to switch entry modes. Furthermore, a display of the palette is independent of a function of the conversion engine, and hence the alphanumeric palette can be displayed in an arbitrary entry mode.

In the present embodiment, in the numeric key entry state, the (alphanumeric or pictorial symbol) palette entry state is introduced through a prescribed operation. However, the initial state during character entry may be set as the palette entry state (i.e. the numeric key entry state and the palette entry state may simultaneously be activated). For example, when a character is entered by activating a particular application from a standby state where no application is activated, or by providing an operation other than a button operation (e.g. rotating the display portion in a mobile telephone that has a display portion rotary mechanism) to automatically activate an application, the initial character entry state may be set as the palette entry state. In such a state, portable information terminal 1 accepts both of character entry from the numeric keys and character entry from the palette.

Furthermore, portable information terminal 1 according to the present embodiment uses two types of keys to switch displays of the palettes. A user can thereby cause a prescribed palette to be displayed from a certain palette, through at most two operations. Accordingly, a user can enter an alphanumeric character through a fewer operations than in the case where the palettes are cyclically displayed.

Furthermore, in portable information terminal 1 according to the present embodiment, an operation for displaying two types of palettes (alphanumeric and pictorial symbol) is assigned to the same key, and depending on time during which the key is pressed, the numeric key entry state is shifted to any of palette entry states. Accordingly, a user can recall the palette display operation more easily. Furthermore, a user can cause a prescribed palette to be displayed with a fewer operations than in the case where the palettes are cyclically displayed. Moreover, operations for shifting to respective palette entry states are distinctly different from one another, and hence even if different functions are assigned to the softkeys in respective palette entry modes, a user can easily be aware that different functions are assigned to the softkeys.

Furthermore, portable information terminal 1 according to the present embodiment causes alphanumeric characters to be displayed on the palette in a double-width manner, a single-width manner, an upper-case character manner, and a lower-case character manner. Accordingly, it becomes possible to view characters in a listed manner on each palette, even on a small screen as in portable information terminal 1. Therefore, a user can enter alphanumeric characters without switching pages of the palette. Furthermore, a user can select and enter a character by visually checking the same, and hence an easy entry operation is achieved. Particularly, alphabet entry by "two-touch entry" is very difficult to understand, so that the character entry via the alphanumeric palette is considered to be quite useful for a user that performs the two-touch entry. Note that the "two-touch entry" refers to a character entry method with the use of the numeric key being pressed twice (e.g. "1" and "2", and others).

Furthermore, in portable information terminal 1 according to the present embodiment, a function of successively selecting and designating characters on the alphanumeric palette is assigned to determination key 15. Determination key 15 is located in a position that allows easy pressing when a user holds second cabinet 3 and enters characters. Accordingly, a user can enter alphanumeric characters quickly and successively.

### [Second Embodiment]

A portable information terminal according to the present embodiment differs from the portable information terminal according to the first embodiment in that a character can be entered through a numeric key operation in the alphanumeric palette entry state, while the alphanumeric palette is displayed. Functional configurations and others are the same as those of portable information terminal 1 described in the first embodiment, and hence the description thereof will not be repeated.

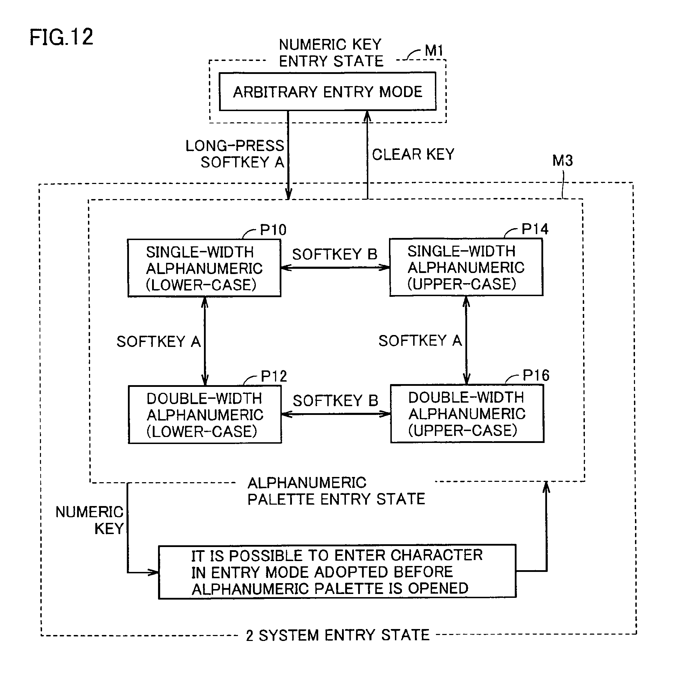

Fig. 12 is a drawing that shows how a character entry state according to the present embodiment is shifted.

With reference to Fig. 12, there will be described how an entry state is shifted.

In numeric key entry state M1, a character can be entered in an arbitrary entry mode. Here, if softkey A is long-pressed, the state is shifted to alphanumeric palette entry state M3. Note that if softkey A is pressed, the state is shifted to pictorial symbol palette entry state M2, as in the first embodiment, and hence the description thereof will not be repeated.

Key operations in alphanumeric palette entry state M3 are the same as those in the first embodiment, except for the numeric key operation. In the second embodiment, in alphanumeric palette entry state M3, a character can be entered via the numeric key in an entry mode adopted before the alphanumeric palette was opened. At that time, the alphanumeric palette remains displayed. When a character to be entered is determined via the numeric key, the palette entry state appears again. In other words, if softkey A is long-pressed in the numeric key entry state, entry via two systems, namely, via the alphanumeric palette and the numeric key, can be implemented.

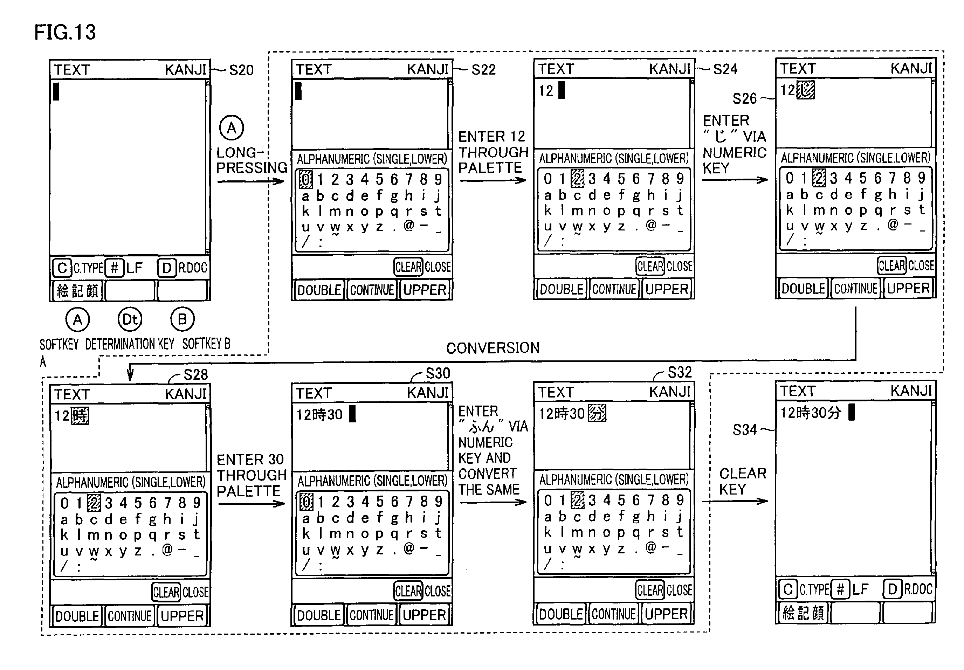

Fig. 13 is a drawing that shows an example of character entry according to the present embodiment.

With reference to Fig. 13, there will be described the character entry according to the present embodiment.

A screen S20 shows a screen on the display portion in numeric key entry state M1. Here, if softkey A is long-pressed, the state is shifted to alphanumeric palette entry state M3. As a result, the display portion is switched to a screen S22 where a single-width, lower-case alphanumeric character palette, for example, is displayed.

On screen S22, if a user selects a character on the alphanumeric palette by pressing the direction key or the like and enters "12", the display portion provides a display such as a screen S24.

Next, on screen S24, if a user presses the numeric keys and enters 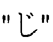 ("J-I": a hiragana that represents time), the display portion provides a display such as a screen S26.

As shown on screen S26, the alphanumeric palette remains displayed. If a user presses a key to which a character conversion function is assigned, and 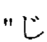 is converted into 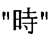 (a kanji that corresponds to 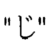 ), the display provides a display such as a screen S28.

Furthermore, if a user selects a character on the alphanumeric palette by pressing the direction key or the like and enters "30" on screen S28, the display portion provides a display such as a screen S30.

If a user enters 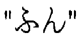 ("F-U-N": hiraganas that represent a minute) via the numeric keys and converts the same into 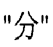 (a kanji that corresponds to 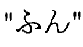 ) on screen S30, the display portion provides a display such as a screen S32.

If the clear key is pressed on screen S32, the alphanumeric palette is closed and the character entry screen such as screen S34 appears again.

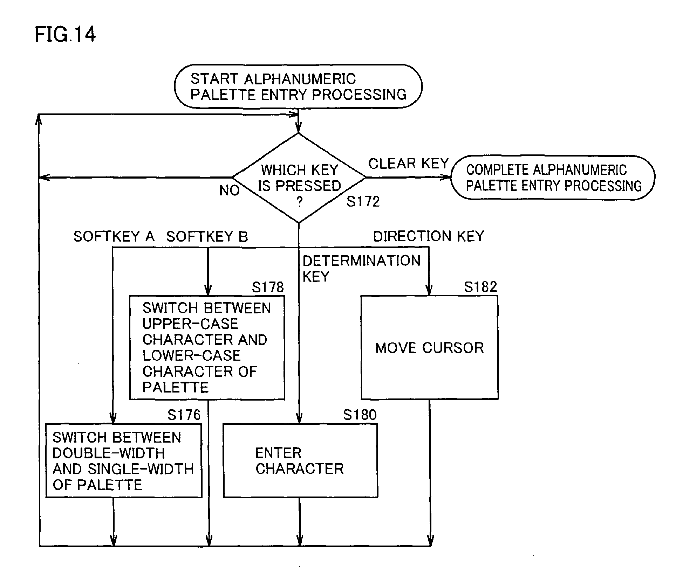

Fig. 14 is a flowchart that shows a flow of the alphanumeric palette entry processing according to the present embodiment.

With reference to Fig. 14, there will be described the alphanumeric palette entry processing that enables the processing shown in Fig. 13. Note that in portable information terminal 1 according to the present embodiment, alphanumeric palette entry processing that will be described later is executed in step S 108 in Fig. 9, instead of the alphanumeric palette entry processing shown in Fig. 10.

In step S172, control unit 30 checks which key other than the numeric keys is pressed. If the numeric key is pressed, a character is entered through the processing shown in Fig. 8 (step S104), and a display of the palette is maintained.

If control unit 30 determines that no key is pressed (NO in step S172), it returns to the processing in step S 172.

If control unit 30 determines that the pressed key is softkey A (SOFTKEY A in step S172), it instructs display driver unit 34 to switch between a double-width display and a single-width display of the palette in step S 176, and returns to the processing in step S 172.

If control unit 30 determines that the pressed key is softkey B (SOFTKEY B in step S 172), it instructs display driver unit 34 to switch between an upper-case character display and a lower-case character display of the palette in step S 178, and returns to the processing in step S 172.

If control unit 30 determines that the pressed key is the determination key (DETERMINATION KEY in step S 172), it enters a character selected by the instruction cursor in step S 180, and returns to the processing in step S 172.

If control unit 30 determines that the pressed key is the direction key (DIRECTION KEY in step S 172), it instructs display driver unit 34 to move the instruction cursor to the direction indicated by the direction key being pressed, and display the same in step S 182, and returns to the processing in step S 172.

If control unit 30 determines that the pressed key is the clear key (CLEAR KEY in step S 172), it instructs display driver unit 34 to close the alphanumeric palette displayed on the display portion, and terminates the alphanumeric palette entry processing.

As such, the alphanumeric palette entry processing (step S 108 in Fig. 9) is terminated. In the present embodiment, if a numeric key is pressed, a character is entered through the processing shown in Fig. 8 (step S104) and a display of the palette is maintained, as described above.

Note that steps S 176 and S 178 in Fig. 14 are executed by display control unit 301, and steps S180 and S182 are executed by entry control unit 302.

In the portable information terminal according to the present embodiment, a character can be entered through a numeric key operation, while the alphanumeric palette is being displayed. It is thereby possible to achieve the effects of the first embodiment, and additionally, eliminate the time and effort to provide a key operation for switching entry modes, when, for example, one successively enters alphanumeric characters and wishes to temporarily set the entry mode back to the mode adopted before the alphanumeric palette was displayed.

Also in the pictorial symbol palette entry state, as in the above-described alphanumeric palette entry state, a character may be entered through a numeric key operation, while a display of the palette is being maintained. Alternatively, a character may be entered via two systems, namely, via the palette and the numeric keys, in both of the pictorial symbol palette entry state and the alphanumeric palette entry state.

### [Third Embodiment]

A portable information terminal according to the present embodiment differs from the portable information terminal according to the second embodiment in that the alphanumeric palette includes a functional display (icon) that is capable of selecting and designating a display and others of the pictorial symbol palette. Functional configurations are the same as those in portable information terminal 1 described in the first embodiment, and hence the description thereof will not be repeated.

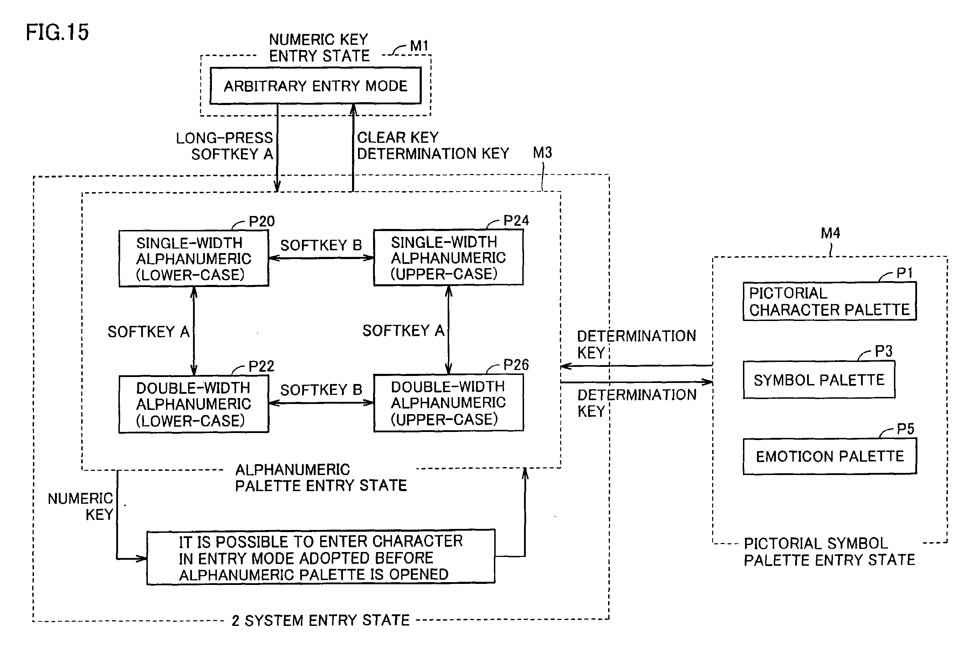

Fig. 15 is a drawing that shows how a character entry state according to the present embodiment is shifted.

With reference to Fig. 15, there will be described how the entry state is shifted.

In numeric key entry state M1, a character can be entered in an arbitrary entry mode. Here, if softkey A is long-pressed, the state is shifted to alphanumeric palette entry state M3. Note that if softkey A is pressed, the state is shifted to pictorial symbol palette entry state M2, as in the first embodiment, and hence the description thereof will not be repeated.

Key operations in alphanumeric palette entry state M3 are the same as those in the second embodiment, except for the determination key operation. The alphanumeric palette according to the present embodiment includes three icons that designate respective displays of the three palettes included in the pictorial symbol palette, and an icon that instructs to close the alphanumeric palette.

Here, if the icon that shows a display of the pictorial symbol palette is pressed via the determination key, the state is shifted to pictorial symbol palette entry state M4. Accordingly, a pictorial symbol palette selected by the instruction cursor is displayed.

If the icon for closing the alphanumeric palette is pressed via the determination key, the alphanumeric palette is closed and the state is shifted to numeric key entry state M1.

In pictorial symbol palette entry state M4, there is displayed any of pictorial character palette P1, symbol palette P3, and emoticon palette P5, which is shown by the icon selected and designated in the alphanumeric palette entry state. If the instruction cursor is moved on any palette and a character is entered via the determination key, the state is shifted to alphanumeric palette entry state M3. In other words, in pictorial symbol palette entry state M4, a pictorial character and others may temporarily be entered while the alphanumeric palette is being displayed.

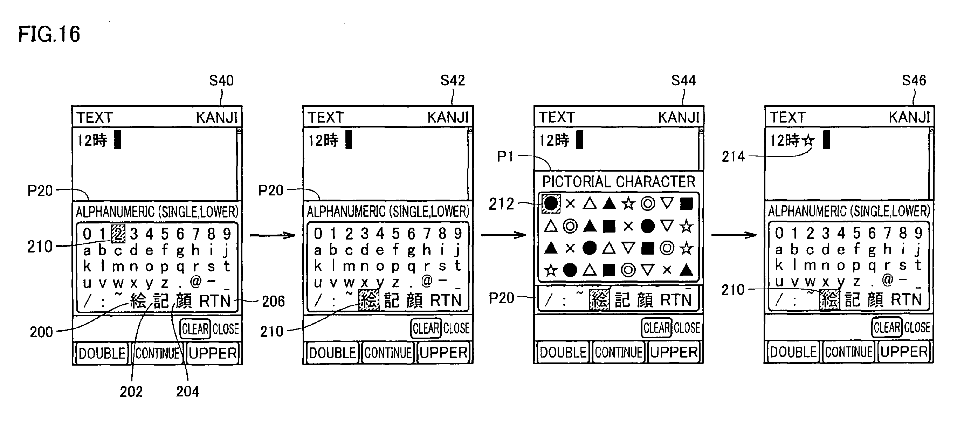

Fig. 16 is a drawing that shows an example of character entry according to the present embodiment.

With reference to Fig. 16, there will be described the character entry according to the present embodiment.

A screen S40 shows a screen of the display portion in alphanumeric palette entry state M2. Single-width, lower-case alphanumeric character palette P20 includes icons 200, 202, 204, and 206, in addition to alphanumeric characters and others. These icons can be selected by an instruction cursor 210.

Icon 200 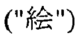 shows that pictorial character palette display processing is executed. Icon 202 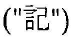 shows that symbol palette display processing is executed. Icon 204 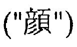 shows that emoticon palette display processing is executed. Icon 206 ("RTN (RETURN)") shows that alphanumeric palette closing processing is executed.

When instruction cursor 210 is moved to a site where icon 200 is located on screen S40 via the direction key, the display portion provides a display such as a screen S42.

When icon 200 is selected and designated via the determination key on screen S42, the display portion provides a display such as a screen S44.

On screen S44, pictorial character palette P1 is displayed. A character on pictorial character palette P1 can be selected by moving an instruction cursor 212. Here, when "☆" is selected and designated, the display portion provides a display such as a screen S46.

On screen S46, pictorial character palette P1 is closed, and "☆" is displayed as shown by a reference character 214. It is again possible to select and designate an alphanumeric character and others on single-width, lower-case alphanumeric character palette P20, by moving instruction cursor 210.

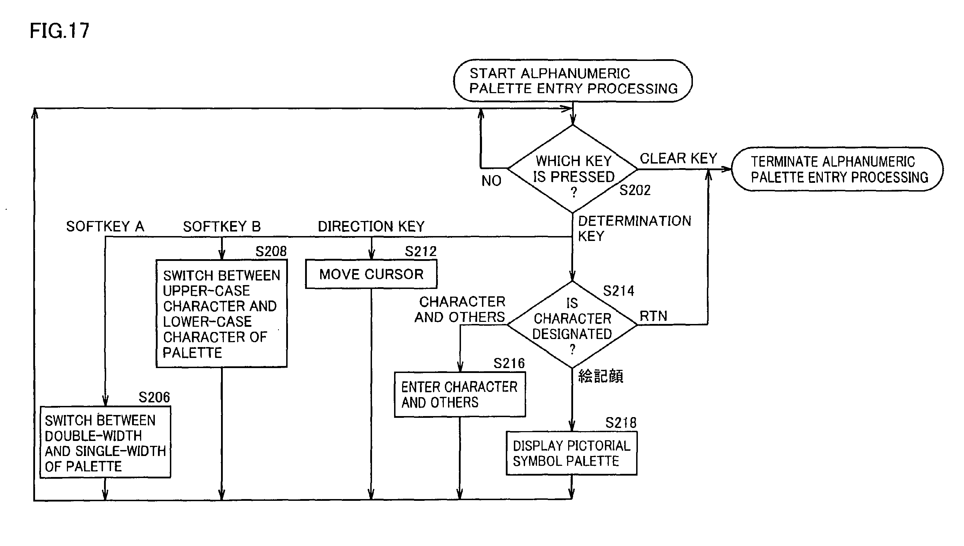

Fig. 17 is a flowchart that shows a flow of alphanumeric palette entry processing according to the present embodiment.

With reference to Fig. 17, there will be described the alphanumeric palette entry processing that enables the processing shown in Fig. 16. In portable information terminal 1 according to the present embodiment, alphanumeric palette entry processing that will be described later is executed in step S 108 in Fig. 9, instead of the alphanumeric palette entry processing shown in Fig. 10.

In step S202, control unit 30 checks which key other than the numeric keys is pressed. Note that if a numeric key is pressed, a character is entered through the processing shown in Fig. 8 (step S 104), and a display of the palette is maintained.

If control unit 30 determines that no key is pressed (NO in step S202), it returns to the processing in step S202.

If control unit 30 determines that the pressed key is softkey A (SOFTKEY A in step S202), it instructs display driver unit 34 to switch between a double-width display and a single-width display of the palette in step S206, and returns to the processing in step S202.

If control unit 30 determines that the pressed key is softkey B (SOFTKEY B in step S202), it instructs display driver unit 34 to switch between an upper-case character display and a lower-case character display of the palette in step S208, and returns to the processing in step S202.

If control unit 30 determines that the pressed key is the direction key (DIRECTION KEY in step S202), it instructs display driver unit 34 to move the instruction cursor to the direction indicated by the direction key being pressed, and display the same in step S212, and returns to the processing in step S202.

If control unit 30 determines that the pressed key is the determination key (DETERMINATION KEY in step S202), it checks which character on the palette is selected in step S214.

If control unit 30 determines that a pictorial character, an alphanumeric character, or the like on the displayed palette is selected (CHARACTER AND OTHERS in step S214), it enters the selected character and others in step S216. Here, if a pictorial character on the pictorial symbol palette is entered, control unit 30 instructs display driver unit 34 to cancel a display of the pictorial symbol palette, and then returns to the processing in step S202.

If control unit 30 determines that an icon that displays any of the pictorial symbol palettes is selected ( 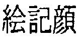 in step S214), it instructs display driver unit 34 to display the selected and designated pictorial symbol palette in step S218, and returns to the processing in step S202.

If control unit 30 determines that the icon "RTN" included in the alphanumeric palette is selected (RTN in step S214), it instructs display driver unit 34 to close the alphanumeric palette displayed on the display portion, and terminates the alphanumeric palette entry processing.

If control unit 30 determines that the pressed key is the clear key (CLEAR KEY in step S202), it instructs display driver unit 34 to close the alphanumeric palette displayed on the display portion, and terminates the alphanumeric palette entry processing.

As such, the alphanumeric palette entry processing (step S108 in Fig. 9) is terminated. Note that in the present embodiment, when a numeric key is pressed, a character is entered through the processing shown in Fig. 8 (step S104), while a display of the palette is being maintained, as described above.

Note that steps S206, S208 and S218 in Fig. 17 are executed by display control unit 301, and steps S212 and S216 are executed by entry control unit 302.

The portable information terminal according to the present embodiment displays the alphanumeric palette that includes icons each capable of selecting and designating a display of the pictorial symbol palette and others. It is thereby possible to achieve the effects of the second embodiment, and in addition, eliminate the time and effort to provide a key operation for closing the alphanumeric palette and displaying the pictorial character palette when, for example, one successively enters alphanumeric characters and wishes to enter a pictorial character. Particularly, pictorial characters are less likely to be entered successively, and hence the present invention is effective when a pictorial character is temporarily entered.

Also in the pictorial symbol palette entry state, as in the above-described alphanumeric palette entry state, icons (an icon that instructs to display the alphanumeric palette, and an icon that instructs to close the pictorial symbol palette) may be included in the palette. Alternatively, in both of the pictorial symbol palette entry state and the alphanumeric palette entry state, it is also possible to shift from the current entry state to the numeric key entry state or display another palette in the same entry state via the icon.

Furthermore, a character entry processing method performed by the portable information terminal according to the present invention may be provided as a program. Such a program may be recorded in a computer readable record medium such as a memory card and provided as a program product. Alternatively, the program may be downloaded via a network and provided.

The provided program product is installed in a program storage unit such as a hard disk and executed. The program product includes a program itself and the record medium that records the program.

Although the present invention has been described and illustrated in detail, it is clearly understood that the same is by way of illustration and example only and is not to be taken by way of limitation, the scope of the present invention being interpreted by the terms of the appended claims.

## Claims

1. A portable information terminal, comprising:
a display unit (4, 34);
an operation unit (17) having a first operation key (11) and a second operation key (12, 13) for allowing a user to perform an operation for character entry; and
a control unit (30) for controlling processing for said character entry, wherein
said control unit includes a display control unit (301) for causing said display unit to display a first region and a second region,
said first region corresponds to an entry standby display in a character entry state of a first character type via said first operation key, and said second region corresponds to a display for character entry in a character entry state of a second character type via said second operation key, and
said control unit further includes an entry control unit (302) accepting entry of a character of said first character type or said second character type in accordance with said first operation key or said second operation key, while maintaining the character entry state of said first character type and the character entry state of said second character type.

2. The portable information terminal according to claim 1, wherein if a first prescribed operation is accepted when said entry standby display is being displayed on said display unit, said display control unit causes said second region to be displayed.

3. The portable information terminal according to claim 2, wherein said entry control unit successively accepts characters of said second character type in accordance with an operation via said second operation key, while the character entry state of said first character type and the character entry state of said second character type are being maintained.

4. The portable information terminal according to claim 3, further comprising a storage unit (32) storing at least one second character type array table for displaying in a listed manner a plurality of characters included in said second character type, wherein
said display control unit causes said second character type array table to be displayed in said second region, and
said entry control unit accepts, as said character entry, a character in said second character type array table, selected and designated via said second operation key.

5. The portable information terminal according to claim 4, wherein
said storage unit further stores at least one third character type array table for displaying in a listed manner a plurality of characters included in a third character type,
said operation unit further has a third operation key (10a), and
in the character entry state of said first character type, if an operation via said third operation key in a first manner is accepted, said display control unit causes any of said at least one second character type array table to be displayed, and if an operation via said third operation key in a second manner is accepted, said display control unit causes any of said at least one third character type array table to be displayed.

6. The portable information terminal according to claim 5, wherein
said first manner means that said third operation key is pressed for time less than prescribed time, and
said second manner means that said third operation key is pressed for at least said prescribed time.

7. The portable information terminal according to claim 4, wherein in accordance with a second prescribed operation, said display control unit switches to an array table in a plurality of said second character type array tables, different from said second character type array table displayed on said display unit.

8. The portable information terminal according to claim 7, wherein said second character type corresponds to alphanumeric characters.

9. The portable information terminal according to claim 8, wherein
said at least one second character type array table includes an array table of double-width alphanumeric characters and an array table of single-width alphanumeric characters, and
said display control unit switches between said array table of the double-width alphanumeric characters and said array table of the single-width alphanumeric characters.

10. The portable information terminal according to claim 8, wherein
said at least one second character type array table includes an array table of upper-case alphanumeric characters and an array table of lower-case alphanumeric characters, and
said display control unit switches between said array table of the upper-case alphanumeric characters and said array table of the lower-case alphanumeric characters.

11. The portable information terminal according to claim 7, wherein said second character type corresponds to pictorial symbols which represent at least one of pictorial characters, symbols and emoticons.

12. The portable information terminal according to claim 11, wherein said display control unit switches between an array table including first pictorial symbols and an array table including second pictorial symbols.

13. The portable information terminal according to claim 1, further comprising a storage unit (32) storing at least one second character type array table for displaying in a listed manner a plurality of characters included in said second character type, and at least one third character type array table for displaying in a listed manner a plurality of characters included in a third character type, wherein
said third character type array table is used for character entry in a character entry state of said third character type via said second operation key,
said display control unit causes said second character type array table or said third character type array table to be displayed in said second region,
while said second character type array table is being displayed, and while said display control unit maintains a display of said second character type array table, said entry control unit successively accepts, as said character entry, characters in said second character type array table, and
while said third character type array table is being displayed, said entry control unit accepts, as said character entry, a character in said third character type array table, and in accordance with the fact that said entry control unit has accepted, as said character entry, the character in said third character type array table, said display control unit cancels a display of said third character type array table.

14. The portable information terminal according to claim 1, wherein said first operation key includes numeric keys (18), an asterisk key (19), and a pound key (20).

15. The portable information terminal according to claim 1, wherein said second operation key is a cursor key (12, 13).

16. The portable information terminal according to claim 1, wherein said display control unit cancels a display in said second region displayed on said display unit, in accordance with an operation via said first operation key, while the character entry state of said first character type and the character entry state of said second character type are maintained.

17. The portable information terminal according to claim 1, wherein said display control unit maintains a display in said second region displayed on said display unit, in accordance with an operation via said first operation key, while the character entry state of said first character type and the character entry state of said second character type are maintained.

18. The portable information terminal according to claim 1, wherein said second region includes a functional display for instructing said display control unit to provide a display for character entry in a character entry state of a third character type.

19. The portable information terminal according to claim 1, further comprising a communication control unit (35) for allowing said user to communicate.

20. A record medium recording a control program for causing a portable information terminal to execute character entry processing, said portable information terminal including an operation unit having a first operation key and a second operation key for allowing a user to perform an operation for character entry, a display unit, and a processing unit, and said control program including the steps of:
said processing unit causing said display unit to display a first region corresponding to an entry standby display in a character entry state of a first character type via said first operation key, and a second region corresponding to a display for character entry in a character entry state of a second character type via said second operation key; and
said processing unit accepting entry of a character of said first character type or said second character type in accordance with said first operation key or said second operation key, while maintaining the character entry state of said first character type and the character entry state of said second character type.

21. A method for character entry processing, executed in a portable information terminal including an operation unit having a first operation key and a second operation key for allowing a user to perform an operation for character entry, a display unit, and a processing unit, comprising the steps of:
said processing unit causing said display unit to display a first region corresponding to an entry standby display in a character entry state of a first character type via said first operation key, and a second region corresponding to a display for character entry in a character entry state of a second character type via said second operation key; and
said processing unit accepting entry of a character of said first character type or said second character type in accordance with said first operation key or said second operation key, while maintaining the character entry state of said first character type and the character entry state of said second character type.
